# EUROPÄISCHE PATENTSCHRIFT

(11) **EP 2 452 087 B1**
(45) Veröffentlichungstag und Bekanntmachung des Hinweises auf die Patenterteilung: **26.08.2015**
(21) Anmeldenummer: 10730436.2
(22) Anmeldetag: 01.07.2010
(51) Int. Cl.: F16C 33/10, F16C 33/74, F16C 17/03

(54) **RADIAL-KIPPSEGMENT-LAGER**
TILTING PAD JOURNAL BEARING
PALIER RADIAL À SEGMENTS BASCULANTS

(30) Priorität: 08.07.2009 DE 102009032276
(43) Veröffentlichungstag der Anmeldung: 16.05.2012
(73) Patentinhaber: Siemens Aktiengesellschaft, 80333 München (DE)
(72) Erfinder: HOFMANN, Andreas, 91091 Grossenseebach (DE)
(86) Internationale Anmeldenummer: PCT/EP2010/059400
(87) Internationale Veröffentlichungsnummer: WO 2011/003806

(56) Entgegenhaltungen:
- JP-A- 58 180 814
- JP-A- 2006 234 147
- US-A- 5 482 380

## Beschreibung

Die Erfindung betrifft ein Radial-Kippsegment-Lager gemäß dem Oberbegriff des Anspruchs 1 sowie eine Turbine mit einem solchen Radial-Kippsegment-Lager.

Für die radiale Lagerung von rotierenden Wellen werden üblicherweise Lager mit feststehenden Lagerschalen verwendet, die die Welle vollständig umschließen. Das Öl zur Schmierung wird dabei über eine oder mehrere auf den Lagerumfang verteilten, axial verlaufenden Nuten zugeführt. Gleitlager, bei denen die Schale längs des Umfangs durch Axialnuten in Teilgleitflächen unterteilt ist, bezeichnet man als Mehrflächen-Lager mit festem Segment. Sollen solche Mehrflächenlager für hohe Umfangsgeschwindigkeiten ausgelegt werden, so sind verhältnismäßig weite Schmierspalte erforderlich, da ansonsten eine unzulässige Erwärmung eintreten würde. Relativ große Schmierspaltweiten können aber insbesondere bei hohen Umfangsgeschwindigkeiten zu einem Umschlagen der laminaren Strömung in eine turbulente Spaltströmung führen, was mit einem sehr hohen Anstieg der Lagerreibung einhergeht. Zudem wird bei einem großen Lagerspiel die Welle nur unzureichend geführt.

Kippsegment-Lager, bei denen der Wellenumfang nicht mehr vollständig vom Lager umschlossen sind, bieten hier einen Ausweg. Ein solches Kippsegment-Lager ist beispielsweise aus der US 5,492,380 bekannt. Die Welle wird bei einem Kippsegment-Lager durch mindestens 3 Kippsegmente gehalten, die je nach Belastung und Verwendungszweck des Lagers gleich oder ungleiche Umfangslängen aufweisen. Die Gleitflächen der Segmente sind üblicherweise kreiszylindrisch. Zur axialen Abdichtung der durch die Beanstandung der Kippsegmente gebildeten Zwischenräume sind in axialer Richtung vor und hinter dem Kippsegment-Lager Dichtstege angeordnet. Die Dichtstege sind dabei konzentrisch zum Lagerdurchmesser angeordnet. Der Innendurchmesser des Radial-Kippsegment-Lagers ist dabei immer kleiner als der Innendurchmesser des Dichtsteges, sodass es zu keinen Aufliegen der Welle auf dem Dichtsteg und damit zur Zerstörung des Dichtsteges kommen kann. Die Überdeckung der zwischen den einzelnen Kipplagersegmenten gebildeten Zwischenräume durch den Dichtsteg ist jeweils gleich groß. Nachteilig an der derzeitigen Ausbildung des Radial-Kippsegment-Lagers ist, dass insbesondere bei hohem Lagerlasten und/oder hohen Umfangsgeschwindigkeiten der Welle es zu hohen Gleitlagertemperaturen kommt, denen mit einer entsprechenden Reduzierung der Tragfähigkeit des Lagers begegnet werden muss.

Ausgehend vom vorliegenden Stand der Technik, ist es Aufgabe der vorliegenden Erfindung, ein Radial-Kippsegment-Lager bereitzustellen, bei dem die Ölmenge, die durch die Zwischenräume aus dem Lager ausfließt geregelt werden kann.

Eine weitere Aufgabe der Erfindung ist es, eine Turbine mit einem solchen Kippsegment-Lager bereitzustellen.

Die Aufgabe wird hinsichtlich des Radial-Kippsegment-Lagers durch die Merkmale des unabhängigen Patentanspruchs 1 und hinsichtlich der Turbine durch die Merkmale des unabhängigen Patentanspruchs 5 gelöst.

Vorteilhafte Ausgestaltungen und Weiterbildungen, welche einzeln oder in Kombination miteinander einsetzbar sind, sind Gegenstand der Unteransprüche.

Das erfindungsgemäße Radial-Kippsegment-Lager zur Lagerung einer Welle, umfassend mehrere über den Umfang des Lagers verteilte und zueinander beanstandete Kippsegmente, die in einem Lagergehäuse angeordnet sind, sowie jeweils einem, in axialer Richtung vor und hinter den Kipplagersegmenten angeordneten Dichtsteg, zur axialen Abdichtung der durch die Beabstandung der Kipplagersegmente gebildeten Zwischenräume, wobei der Innendurchmesser des Radial-Kippsegment-Lagers immer kleiner als der Innendurchmesser des Dichtstegs ist, zeichnet sich dadurch aus, dass der Dichtsteg exzentrisch zum Innendurchmesser des Radial-Kippsegment-Lagers angeordnet ist, so dass die jeweils radial vom Dichtsteg überdeckte Fläche der einzelnen Zwischenräume unterschiedlich groß ist. Durch die unterschiedlich starke Überdeckung der jeweiligen zwischen den Kipplagersegmenten gebildeten Zwischenräume kann die Ölmenge, die durch die Zwischenräume aus dem Lager ausfließt, geregelt werden. Ein höherer Öldurchsatz führt zu einem größeren Wärmeaustausch und ermöglicht dadurch eine höhere Tragfähigkeit des Lagers.

Eine erfindungsgemäß bevorzugte Ausgestaltung der Erfindung sieht vor, dass die Exzentrizität zwischen dem Innendurchmesser des Radial-Kippsegment-Lagers und dem Dichtsteg derart ausgebildet ist, dass die kleinste radiale Überdeckung eines Zwischenraums durch den Dichtsteg, zwischen den zwei Kipplagersegmenten vorliegt, die sich im Bereich der höchsten Lagerbelastung befinden. Hierdurch kommt es in diesem Bereich zum größten Öldurchsatz und damit zu einem verbesserten Wärmeaustausch in diesem Bereich. Dies ist besonders vorteilhaft, da im Bereich der höchsten Lagerbelastung auch die größte thermische Belastung vorliegt. Ein hohe Wärmeabfuhr in diesem Bereich wirkt sich somit besonders vorteilhaft aus und erhöht dadurch die Tragfähigkeit des Lagers gegenüber dem Stand der Technik.

Eine weitere vorteilhafte Ausgestaltung der Erfindung sieht vor, dass das Radial-Kippsegment-Lager, welches als hydrostatisches Lager ausgebildet ist, und in den Zwischenräumen Düsenbohrungen aufweist, durch die Flüssigkeit, vorzugsweise Hydrauliköl, eingedüst werden kann, zumindest zwei Düsenbohrungen in den einzelnen Zwischenräumen aufweist, die unterschiedliche Durchmesser aufweisen. Hierdurch kann je nach Anforderung mehr oder weniger Öl in den Bereich der jeweiligen Zwischenräume eingedüst werden. Dies lässt eine individuelle Steuerung des Öldurchsatzes in den jeweiligen Segmentbereichen zu. Besonders vorteilhaft sind die Düsenbohrungen im Bereich hoher Lagerbelastungen größer als im Bereich niedriger Lagerbelastung. Im Bereich höherer Lagerbelastung ist wie bereits erwähnt der Wärmeeintrag größer und es ist notwendig dadurch den Öldurchsatz zu erhöhen. Aus diesem Grund ist es notwendig eine größere Menge an Öl in diesem Bereich einzudüsen als in den Bereich geringerer Lagerbelastung. Auf diese Weise lässt sich der Öleintrag und somit auch die Wärmeabfuhr ganz gezielt je nach Lagerbereich und Belastung in den entsprechenden Lagerbereichen steuern. Eine Ölmengenreduktion im oberen weniger belasteten Gleitlagerbereich ist ohne weiteres möglich, da eine Unterversorgung der oberen Segmente durch den kleineren Dichtspalt aufgrund der exzentrischen Anordnung des Dichtsteges entgegengewirkt wird.

Die erfindungsgemäße Turbine, insbesondere Dampfturbine, zeichnet sich dadurch aus, dass der Rotor mit wenigstens einem Radial-Kippsegment-Lager der zuvor beschriebenen Art ausgebildet ist. Bei Turbinen und insbesondere Dampfturbinen ist das Gewicht der zu lagernden Wellen häufig sehr groß und daher die Lagerbelastung ebenfalls sehr groß. Hierdurch kommt es zu sehr starker Wärmeentwicklung im Lager, die sich besonders vorteilhaft durch das erfindungsgemäße Lager abführen lässt. Das erfindungsgemäße Lager im Zusammenhang mit der Turbine ermöglicht somit besonders hohe Lagerbelastungen.

Anhand eines Ausführungsbeispieles werden nachfolgende weitere Vorteile der Erfindung erläutert.
Die Figuren zeigen;
- Figur 1: ein Radial-Kippsegment-Lager nach dem Stand der Technik im Radialschnitt;
- Figur 2: ein erfindungsgemäßes Radial-Kippsegment-Lager im Radialschnitt.

Bei den Figuren handelt es sich jeweils um stark vereinfachte Darstellungen, bei denen nur die wesentlichen, zur Beschreibung der Erfindung notwendigen Bauteile gezeigt sind. Gleiche bzw. funktionsgleiche Bauteile sind figurübergreifend mit denselben Bezugszeichen versehen.

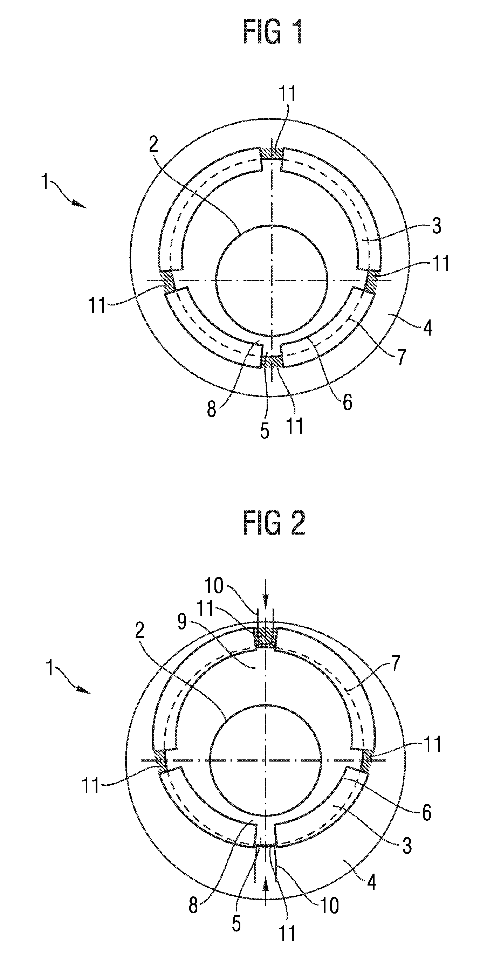

Figur 1 zeigt ein Radial-Kippsegment-Lager nach dem Stand der Technik. Das Radial-Kippsegment-Lager 1 zur Lagerung einer Welle 2 umfasst mehrere, im Beispiel vier, über den Umfang des Lagers verteilte und zueinander beabstandete Kipplagersegmente 3, die in einem nicht näher dargestellten Lagergehäuse angeordnet sind. In axialer Richtung ist vor und hinter den Kipplagersegmenten 3 ein Dichtsteg 4 angeordnet, von dem in der Figur 1 nur der hintere Dichtsteg 4 dargestellt ist. Der Dichtsteg 4 dient zur axialen Abdichtung der durch die Beabstandung der Kipplagersegmente 3 gebildeten Zwischenräume 5. Der Innendurchmesser 6 des Radial-Kippsegment-Lagers 1 ist dabei kleiner als der Innendurchmesser 7 des Dichtstegs 4. Durch die Anordnung des Dichtstegs 4 kommt es zu einer teilweisen radialen Überdeckung 11 der einzelnen Zwischenräume 5 durch den Dichtsteg 4. Da der Innendurchmesser 6 des Radial-Kippsegment-Lagers 1 koaxial zum Dichtsteg 4 angeordnet ist, ist die überdeckte Fläche 11 an allen Zwischenräumen 5 gleich groß. Während des Betriebes wird die größte Lagerbelastung im unteren Bereich 8 des Radial-Kippsegment-Lagers 1 auf. Infolge der höchsten Lagerbelastung kommt es dort auch zum größten Wärmeeintrag. Die Temperatur sollte in diesem Bereich einen bestimmten Wert nicht überschreiten. Nähert sich die Temperatur der maximal zulässigen Temperatur muss die Lagerbelastung reduziert werden. Die Temperatur kann im Lager durch den Öldurchsatz geregelt werden. Je höher der Öldurchsatz über die Zwischenräume 5 ist desto stärker ist auch Wärmeabfuhr aus dem Lager und je höher kann die Lagerbelastung gewählt werden. Der Wärmeabfuhr wird zum einen über die Größe des freien Zwischenraums sowie zum anderen über die zugeführte Ölmenge geregelt. Der freie Zwischenraum, d.h. der nicht durch den Dichtsteg 4 überdeckte Raum ist bei einem Radial-Kippsegment-Lager 1 nach dem Stand der Technik an allen Zwischenräumen gleich groß, unabhängig von der örtlichen Lagerbelastung.

Figur 2 zeigt ein erfindungsgemäßes Radial-Kippsegment-Lager 1. Das Radial-Kippsegment-Lager 1 umfasst wiederum mehrere, im Beispiel vier, über den Umfang des Lagers verteilte und zueinander beabstandete Kipplagersegmente 3. Die Kipplagersegmente 3 sind in einem wiederum nicht näher dargestellten Lagergehäuse angeordnet und die Abdichtung in axialer Richtung erfolgt wiederum durch vor und hinter dem Radial-Kippsegment-Lager 1 angeordneten Dichtstege 4, von denen wiederem nur das hintere in der Figur 2 dargestellt ist. Der Innendurchmesser 6 des Radial-Kippsegment-Lagers 1 ist dabei wiederum kleiner als der Innendurchmesser 7 des Dichtstegs 4. Im Gegenstand zum Stand der Technik ist der Dichtsteg 4 allerdings exzentrisch zum Innendurchmesser 6 des Radial-Kippsegment-Lagers 1 angeordnet. Dadurch ist die jeweils radial vom Dichtsteg 4 überdeckte Fläche 11 der einzelnen Zwischenräume 5 unterschiedlich groß. Um die jeweils vom Dichtsteg 4 überdeckte Fläche 11 der einzelnen Zwischenräume 5 besser darstellen zu können sind diese in der Figur 2 schattiert dargestellt. Die Exzentrizität zwischen dem Innendurchmesser 6 des Radial-Kippsegment-Lagers 1 und dem Dichtsteg 4 ist im Ausführungsbeispiel so gewählt, dass sich die kleinste radiale Überdeckung eines Zwischenraums 5 durch den Dichtsteg 4, zwischen den zwei Kipplagersegmenten 3 vorliegt, die sich im Bereich 8 der höchsten Lagerbelastung befinden. Hierdurch ergibt sich in diesem Bereich der größte freie Zwischenraum zwischen zwei benachbarten Kipplagersegmenten 3, wodurch ein besonders großer Öldurchsatz in diesem Bereich erzielbar ist. Durch den erhöhten Öldurchsatz kann im Gegensatz zum Stand der Technik mehr Wärme in diesem höher belastetem Lagerbereich abgeführt werden, wodurch die maximale Lagerbelastung gesteigert werden kann. Im Gegensatz dazu ist im oberen Bereich 9, der Zwischenraum 5, zwischen den beiden benachbarten Kipplagersegmenten 3, vollständig durch den Dichtsteg 7 überdeckt. Da hier die Lagerbelastung und damit der Wärmeeintrag nur sehr gering sind, ist hier ein größerer öldurchsatz zum Abtransport der Wärme nicht erforderlich.
Zum Eindüsen des Öls befinden sich zwischen den einzelnen Kipplagersegmenten 3 Düsenbohrungen 10, von denen in Figur 2 nur die obere und die untere dargestellt sind. Die Düsenbohrung 10 im unteren Bereich des Lagers ist größer gewählt als die Düsenbohrung im oberen Bereich des Radial-Kippsegment-Lagers. Hierdurch wird eine Ölmengenreduktion im oberen weniger belasteten Bereich ermöglicht, eine Unterversorgung der oberen Segmente wird durch den kleineren Dichtspalte dabei entgegengewirkt, so dass die Gefahr insbesondere von Segmentflattern vermieden wird.

Insgesamt ergeben sich somit durch das erfindungsgemäße Radial-Kippsegment-Lager eine Verringerung der maximalen Lagertemperatur und damit eine Erhöhung der Tragfähigkeit des Lagers sowie ein geringerer Ölverbrauch des Lagers.

Das erfindungsgemäße Radial-Kippsegment-Lager eignet sich insbesondere für eine Turbine, insbesondere eine Dampfturbine, bei der große Rotoren mit großen Gewichten eingesetzt werden, die regelmäßig zu hohen Lagerlasten und den damit verbundenen hohen Temperaturen führen.

## Patentansprüche

1. Radial-Kippsegment-Lager (1) zur Lagerung einer Welle (2), umfassend mehrere, über den Umfang des Lagers verteilte und zueinander beabstandete Kipplagersegmente (3), die in einem Lagergehäuse angeordnet sind, sowie jeweils einem, in axial Richtung vor und hinter den Kipplagersegmenten (3) angeordneten Dichtsteg (4), zur axialen Abdichtung der durch die Beabstandung der Kipplagersegmente gebildeten Zwischenräume (5), wobei der Innendurchmesser (6) des Radial-Kippsegment-Lager (1) immer kleiner als der Innendurchmesser (7) des Dichtstegs (4) ist,
**dadurch gekennzeichnet, dass**
der Dichtsteg (4) exzentrisch zum Innendurchmesser (6) des Radial-Kippsement-Lagers (1) angeordnet ist, so dass die jeweils radiale vom Dichtsteg (4) überdeckte Fläche (11) der einzelnen Zwischenräume (5), unterschiedlich groß ist.

2. Radial-Kippsegment-Lager (1) nach Anspruch 1,
**dadurch gekennzeichnet, dass**
die Exzentrizität zwischen dem Innendurchmesser (6) des Radial-Kippsegment-Lagers (1) und dem Dichtsteg (4) derart ausgebildet ist, dass die kleinste radiale Überdeckung eines Zwischenraums (5) durch den Dichtsteg (4), zwischen den zwei Kipplagersegmenten (3) vorliegt, die sich im Bereich der höchsten Lagerbelastung (8) befinden.

3. Radial-Kippsegment-Lager (1) nach Anspruch 1 oder 2,wobei dass Radial-Kippsegment-Lager (1) als hydrostatisches Lager ausgebildet ist, und in den durch die Beabstandung der Kipplagersegmente (3) gebildeten Zwischenräumen (5) Düsenbohrungen (10) angeordnet sind, durch die Flüssigkeit, vorzugsweise Hydrauliköl, eingedüst werden kann, wobei zumindest zwei Düsenbohrungen (10) in den einzelnen Zwischenräumen (5) unterschiedliche Durchmesser aufweisen.

4. Radial-Kippsegment-Lager (1) nach Anspruch 3,
**dadurch gekennzeichnet, dass**
die Düsenbohrung (10) im Bereich hoher Lagerbelastung (8) größer ist, als im Bereich niedrigerer Lagerbelastung (12).

5. Turbine, insbesondere Dampfturbine,
**dadurch gekennzeichnet, dass**
der Rotor mit wenigstens einem Radial-Kippsegment-Lager (1) nach Anspruch 1 bis 4 gelagert ist.

## Claims

1. Radial tilting pad bearing (1) for mounting a shaft (2), comprising a plurality of tilting bearing pads (3) which are distributed over the circumference of the bearing, are spaced apart from one another and are arranged in a bearing housing, and in each case one sealing web (4) which is arranged in front of and behind the tilting bearing pads (3) in the axial direction, for axial sealing of the intermediate spaces (5) which are formed by the spacing of the tilting bearing pads, the internal diameter (6) of the radial tilting pad bearing (1) always being smaller than the internal diameter (7) of the sealing web (4), **characterized in that** the sealing web (4) is arranged eccentrically with respect to the internal diameter (6) of the radial tilting pad bearing (1), with the result that the respective radial area (11) of the individual intermediate spaces (5) which is covered by the sealing web (4) is of different size.

2. Radial tilting pad bearing (1) according to Claim 1, **characterized in that** the eccentricity between the internal diameter (6) of the radial tilting pad bearing (1) and the sealing web (4) is configured in such a way that the smallest radial coverage of an intermediate space (5) by the sealing web (4) is present between the two tilting bearing pads (3) which are situated in the region of the greatest bearing loading (8).

3. Radial tilting pad bearing (1) according to Claim 1 or 2, the radial tilting pad bearing (1) being configured as a hydrostatic bearing, and nozzle bores (10) being arranged in the intermediate spaces (5) which are formed by the spacing of the tilting bearing pads (3), through which nozzle bores (10) liquid, preferably hydraulic oil, can be injected, at least two nozzle bores (10) in the individual intermediate spaces (5) having different diameters.

4. Radial tilting pad bearing (1) according to Claim 3, **characterized in that** the nozzle bore (10) is larger in the region of high bearing loading (8) than in the region of lower bearing loading (12).

5. Turbine, in particular steam turbine, **characterized in that** the rotor is mounted by way of at least one radial tilting pad bearing (1) according to Claims 1 to 4.

## Revendications

1. Palier radial à segments basculants (1) pour le montage d'un arbre (2), comprenant plusieurs segments de palier basculants (3) répartis sur le pourtour du palier et espacés les uns des autres, qui sont disposés dans un logement de palier, ainsi que, à chaque fois, une nervure d'étanchéité (4) disposée en sens axial devant et derrière les segments de palier basculants (3) pour assurer l'étanchéité axiale des espaces intermédiaires (5) formés par l'espacement desdits segments de palier basculants, le diamètre intérieur (6) du palier radial à segments basculants (1) étant toujours plus petit que le diamètre intérieur (7) de la nervure d'étanchéité (4),
**caractérisé en ce que**
la nervure d'étanchéité (4) est disposée de façon excentrique par rapport au diamètre intérieur (6) du palier radial à segments basculants (1), de sorte que chaque surface (11) radialement recouverte par la nervure d'étanchéité (4) des différents espaces intermédiaires (5) est de taille différente.

2. Palier radial à segments basculants (1) selon la revendication 1,
**caractérisé en ce que**
l'excentricité entre le diamètre intérieur (6) du palier radial à segments basculants (1) et la nervure d'étanchéité (4) est telle que le plus petit recouvrement radial d'un espace intermédiaire (5) par la nervure d'étanchéité (4) est obtenu entre les deux segments de palier basculants (3) qui se trouvent dans la zone de la plus forte sollicitation du palier (8).

3. Palier radial à segments basculants (1) selon la revendication 1 ou 2, le palier radial à segments basculants (1) étant conçu sous forme de palier hydrostatique, et dans les espaces intermédiaires (5) formés par l'espacement des segments de palier basculants (3) étant agencés des trous de tuyère (10) à travers lesquels peut être injecté un fluide, de préférence de l'huile hydraulique, au moins deux trous de tuyère (10) dans les différents espaces intermédiaires (5) présentant des diamètres différents.

4. Palier radial à segments basculants (1) selon la revendication 3, **caractérisé en ce que** le trou de tuyère (10) est plus grand dans la zone de forte sollicitation du palier (8) que dans la zone de plus faible sollicitation du palier (12).

5. Turbine, en particulier turbine à vapeur,
**caractérisée en ce que**
le rotor est monté avec au moins un palier radial à segments basculants (1) selon la revendication 1 à 4.
